# EUROPÄISCHE PATENTSCHRIFT

(11) **EP 3 405 370 B1**
(45) Veröffentlichungstag und Bekanntmachung des Hinweises auf die Patenterteilung: **29.04.2020**
(21) Anmeldenummer: 17700416.5
(22) Anmeldetag: 13.01.2017
(51) Int. Cl.: B60T 17/00, F15B 21/04, B01D 53/26, F04C 29/04

(54) **LUFTVERSORGUNGSANLAGE**
AIR SUPPLY SYSTEM
SYSTÈME D'ALIMENTATION EN AIR

(30) Priorität: 18.01.2016 DE 102016100705
(43) Veröffentlichungstag der Anmeldung: 28.11.2018
(73) Patentinhaber: KNORR-BREMSE Systeme für Schienenfahrzeuge GmbH, 80809 München (DE)
(72) Erfinder: BECKER, Christian, 80637 München (DE); PRÖLL, Gerhard, 85748 Garching (DE); PLATAS DEL COSO, Adrian, 28012 Madrid (ES)
(86) Internationale Anmeldenummer: PCT/EP2017/050664
(87) Internationale Veröffentlichungsnummer: WO 2017/125320

(56) Entgegenhaltungen:
- EP-A2- 2 963 296
- WO-A1-2015/082432
- DE-A1-102011 121 056

## Beschreibung

Die vorliegende Erfindung betrifft eine Luftversorgungsanlage, insbesondere eine Luftversorgungsanlage zur Montage in oder an einem Schienenfahrzeug oder einem Nutzfahrzeug.

Das Einsatzgebiet der vorliegenden Erfindung erstreckt sich vornehmlich auf Schienenfahrzeuge, deren Druckluftversorgungssystem in erster Linie für die Bereitstellung eines Bremsdrucks für die Fahrzeugbremsen dient. Die Luftversorgungsanlage der Erfindung kann aber in grundsätzlich bei Nutzfahrzeugen aller Art eingesetzt werden, um dort entsprechende Druckluftsysteme zu unterhalten.

Bei Schienenfahrzeugen, insbesondere bei in Wohngebieten fahrenden Schienenfahrzeugen steigen die Anforderungen bezüglich Lärmschutz. Dies erfordert einen immer höheren Aufwand zur Schalloptimierung solcher Luftversorgungsanlagen, wobei im Bereich der Personenbeförderung besonders hohe Anforderungen in Bezug auf die maximal zulässige Schallabstrahlung herrschen. Luftversorgungsanlagen, die auf dem Dach oder Unterflur eines Schienenfahrzeugs montiert werden, weisen deshalb häufig ein Gehäuse zum Kapseln ihrer Komponenten auf, das möglichst schalloptimiert ausgestaltet ist. Aus der DE 10 2012 007 027 A1 ist zum Beispiel ein schalloptimierter Ansaugkasten für eine gekapselte Luftversorgungsanlage bekannt. Die DE 101 21 582 A1 beschreibt eine Luftversorgungsanlage mit einem Schalldämpfer zum Dämpfen der Luftablassgeräusche.

Weitere Luftversorgungsanlagen sind beispielsweise bekannt aus der EP 2 963 296 A2 und der WO 2015/082432 A1.

Insbesondere bei (schall-)gekapselten Luftversorgungsanlagen, die auf dem Dach oder Unterflur montiert werden, ist ein Kühlsystem erforderlich, das ein thermisches Überhitzen der Luftversorgungsanlage verhindern kann.

Es ist die Aufgabe der vorliegenden Erfindung, eine verbesserte Luftversorgungsanlage mit einem Kühlsystem zu schaffen.

Diese Aufgabe wird gelöst durch eine Luftversorgungsanlage mit den Merkmalen des Anspruchs 1. Besonders bevorzugte Weiterbildungen der Erfindung sind Gegenstand der abhängigen Ansprüche.

Die Luftversorgungsanlage der Erfindung weist eine Kompressoreinrichtung zum Erzeugen von Druckluft, eine Lufttrocknereinrichtung zum Entfeuchten der Druckluft und ein Gehäuse zum Kapseln der Kompressoreinrichtung und der Lufttrocknereinrichtung auf. Gemäß der Erfindung ist zudem eine Kühleinrichtung zum Kühlen der Luftversorgungsanlage vorgesehen, wobei die Kühleinrichtung unabhängig vom Betriebszustand der Kompressoreinrichtung betreibbar ist. Dabei ist ferner wenigstens ein Temperatursensor zum Erfassen wenigstens eines Temperaturwerts der Luftversorgungsanlage vorgesehen und die Kühleinrichtung ist in Abhängigkeit von dem wenigstens einen erfassten Temperaturwert betreibbar.

Mit der Kühleinrichtung, die unabhängig vom Betriebszustand der Kompressoreinrichtung betreibbar ist, kann die Gefahr eines Überhitzens der Luftversorgungsanlage in jedem Betriebszustand vermindert werden. Die Kühleinrichtung kann dabei insbesondere auch bei ausgeschalteter Kompressoreinrichtung betrieben werden.

Der wenigstens eine Temperatursensor ist vorzugsweise ausgestaltet, um eine Umgebungstemperatur außerhalb des Gehäuses der Luftversorgungsanlage, eine Temperatur innerhalb des Gehäuses der Luftversorgungsanlage, eine Temperatur eines Kühlluftstroms durch das Gehäuse der Luftversorgungsanlage, eine Temperatur der von der Luftversorgungsanlage erzeugten Druckluft, eine Temperatur eines temperaturkritischen Bauteils der Luftversorgungsanlage, oder dergleichen zu erfassen. Der wenigstens eine Temperatursensor kann auch wenigstens zwei Temperatursensoren umfassen, um Temperaturen an zwei verschiedenen Stellen einer Temperaturdefinition (z. B. innerhalb des Gehäuses) zu erfassen.

In einer vorteilhaften Ausgestaltung der Erfindung ist eine Steuereinrichtung zum Ansteuern der Kühleinrichtung vorgesehen. Die Kühleinrichtung ist dann unabhängig vom Betriebszustand der Kompressoreinrichtung von dieser Steuereinrichtung ansteuerbar. Die Steuereinrichtung ist ausgestaltet, um die Kühleinrichtung anzusteuern; die Steuereinrichtung kann wahlweise auch andere Komponenten der Luftversorgungsanlage oder die gesamte Luftversorgungsanlage ansteuern.

In einer vorteilhaften Ausgestaltung der Erfindung weist die Kühleinrichtung eine Lüftereinrichtung zum Erzeugen eines Kühlluftstroms durch das Gehäuse auf. Die Lüftereinrichtung weist vorzugsweise wenigstens einen Lüfter auf. Der Lüfter kann beispielsweise als Radiallüfter oder Axiallüfter ausgestaltet sein, der Kühlluftstrom kann aber grundsätzlich durch Lüfter beliebiger Bauart generiert werden.

Bei dieser Ausgestaltung weist das Gehäuse vorzugsweise wenigstens einen Kühllufteingang und wenigstens einen Kühlluftausgang auf und ist die Lüftereinrichtung der Kühleinrichtung vorzugsweise derart in oder an dem Gehäuse angeordnet, dass sie einen Kühlluftstrom von dem wenigstens einen Kühllufteingang durch das Gehäuse zu dem wenigstens einen Kühlluftausgang erzeugen kann.

Die Lufttrocknereinrichtung kann stromab der Kompressoreinrichtung zum Entfeuchten der von der Kompressoreinrichtung erzeugten Druckluft und/oder stromauf der Kompressoreinrichtung zum Entfeuchten der durch die Kompressoreinrichtung zu komprimierenden Luft angeordnet sein.

Die Kompressoreinrichtung weist vorzugsweise einen einstufigen oder zweistufigen, ölfreien oder ölgeschmierten Kolbenkompressor oder Schraubenkompressor auf, grundsätzlich ist für die erfindungsgemäße Luftversorgungsanlage aber jede Verdichterbauart anwendbar.

Das Gehäuse der Luftversorgungsanlage kann bevorzugt mit schalldämpfenden Maßnahmen versehen sein. So kann das Gehäuse zum Beispiel einen Schalldämpfer für den Luftablass, schalloptimierte Luftansaugkästen, schalloptimierte Luftleiteinrichtungen, schallgedämmte Gehäusewandungen und dergleichen aufweisen.

Die Luftversorgungsanlage der Erfindung ist in vorteilhafter Weise zur Montage an einem Schienenfahrzeug oder Nutzfahrzeug, d.h. insbesondere auf einem Dach oder Unterflur eines Schienenfahrzeugs oder Nutzfahrzeugs geeignet, sie kann aber ebenso im Innenraum eines Fahrzeugs eingesetzt werden.

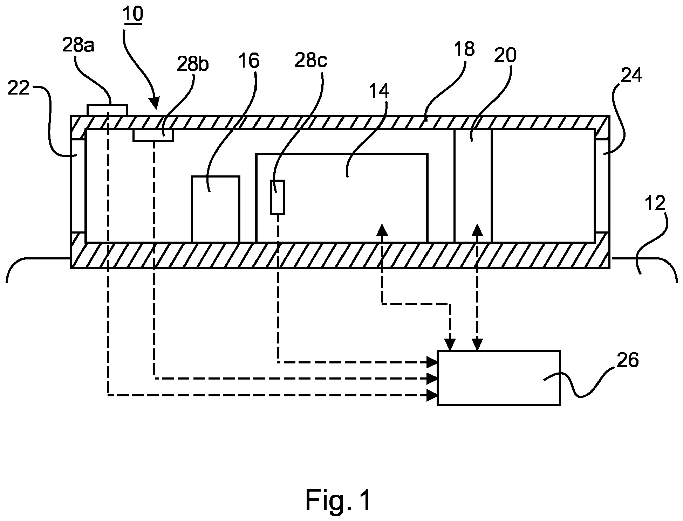

Obige sowie weitere Merkmale und Vorteile der Erfindung werden aus der nachfolgenden Beschreibung eines beispielhaften Ausführungsbeispiels unter Bezugnahme auf die beiliegende Zeichnung besser verständlich. Darin zeigt die einzige Figur 1 in stark vereinfachter Weise den Aufbau einer Luftversorgungsanlage gemäß einem Ausführungsbeispiel der Erfindung.

Fig. 1 zeigt eine Luftversorgungsanlage 10, die auf dem Dach 12 eines Nutzfahrzeugs oder Schienenfahrzeugs montiert werden kann. Die Luftversorgungsanlage 10 dient zum Beispiel der Versorgung von pneumatischen Einrichtungen (z.B. Bremsen, Luftfedern, etc.) eines Druckluftsystems des Nutz- oder Schienenfahrzeugs mit Druckluft.

Die Luftversorgungsanlage 10 weist eine Kompressoreinrichtung 14 zum Erzeugen von Druckluft aus der Umgebungsluft auf, die zum Beispiel einen ein- oder zweistufigen, ölfreien Kolbenkompressor und einen Motor zum Antreiben des Kolbenkompressors aufweist. Stromab der Kompressoreinrichtung 14 ist eine Lufttrocknereinrichtung 16 zum Entfeuchten der erzeugten Druckluft angeordnet.

Kompressoreinrichtung 14 und Lufttrocknereinrichtung 16 sind in einem Gehäuse 18 gekapselt. Das Gehäuse 18 ist strömungstechnisch optimiert ausgeführt und vorzugsweise auch schalloptimiert ausgestaltet und weist zu diesem Zweck zum Beispiel einen Schalldämpfer für den Luftablass, einen schalloptimierten Luftansaugkasten, eine schalloptimierte Luftleiteinrichtung, eine zumindest teilweise schallgedämmte Gehäusewandung, etc. auf.

In dem Gehäuse 18 ist zudem eine Kühleinrichtung 20 untergebracht, die zum Beispiel eine Lüftereinrichtung mit wenigstens einem Lüfter (z. B. Radiallüfter oder Axiallüfter) aufweist. Das Gehäuse 18 ist ferner mit wenigstens einem Kühllufteingang 22 und wenigstens einem Kühlluftausgang 24 ausgestattet. Die Lüftereinrichtung der Kühleinrichtung 20 ist ausgestaltet, um einen Kühlluftstrom von dem wenigstens einen Kühllufteingang 22 durch das Gehäuse 18 zu dem wenigstens einen Kühlluftausgang 24 zu erzeugen. Der Kühlluftstrom strömt dabei in optimierter, gezwungener Weise an den temperaturkritischen Komponenten der Luftversorgungsanlage 10, d. h. insbesondere an der Kompressoreinrichtung 14 vorbei und kühlt diese.

Die Luftversorgungsanlage 10 weist ferner eine Steuereinrichtung 26 auf. Diese Steuereinrichtung 26 steuert / regelt den Betrieb der Komponenten der Luftversorgungsanlage 10, insbesondere der Kompressoreinrichtung 14. Außerdem steuert die Steuereinrichtung 26 die Kühleinrichtung 20 an. Die Steuereinrichtung 26 ist zum Beispiel ebenfalls innerhalb des Gehäuses 18 angeordnet, kann aber auch im Schienen- oder Nutzfahrzeug untergebracht sein.

Obwohl nicht dargestellt, kann die Luftversorgungsanlage 10 weitere anwendungsspezifische pneumatische Komponenten und/oder elektropneumatische Komponenten aufweisen, wie zum Beispiel Sicherheitsventile, Druckschalter, etc.

Alle Systemkomponenten der Luftversorgungsanlage 10 sind im Innern des Gehäuses 18 so eingebaut, dass kein thermischer Kurzschluss existiert. Zum Beispiel sind zwischen den Komponenten ausreichend Abstände, Kühlluftleitbleche, Wärmeisolationen und/oder andere Maßnahmen vorgesehen.

Die Ansteuerung der Kühleinrichtung 20 erfolgt dabei unabhängig vom Betriebszustand der Luftversorgungsanlage 10, insbesondere der Kompressoreinrichtung 14. Insbesondere kann die Kühleinrichtung 20 nicht nur während des Betriebs der Luftversorgungsanlage 10, sondern auch während einer ausgeschalteten Kompressoreinrichtung 14 betrieben werden, um die Komponenten der Luftversorgungsanlage 10 zu belüften bzw. zu kühlen. Dabei erfolgt der Betrieb der Kühleinrichtung 20 insbesondere temperaturgesteuert. Die Ansteuerung der Kühleinrichtung 20 umfasst dabei insbesondere ein Ein- und Ausschalten der Kühleinrichtung 20, optional aber auch eine Leistungsaufnahme und/oder eine Kühlleistung der Kühleinrichtung 20.

Zu diesem Zweck verfügt die Luftversorgungsanlage 10 über wenigstens einen Temperatursensor. Der wenigstens eine Temperatursensor ist vorzugsweise ausgestaltet zum Erfassen wenigstens einer Temperatur innerhalb des Gehäuses 18. Zum Beispiel weist die Luftversorgungsanlage 10 einen Temperatursensor 28a zum Erfassen einer Umgebungstemperatur außerhalb des Gehäuses 18 oder einer Temperatur der an der Luftversorgungsanlage vorbei strömenden Umgebungsluft, einen Temperatursensor 28b zum Erfassen einer Temperatur des von der Lüftereinrichtung der Kühleinrichtung 20 erzeugten Kühlluftstroms durch das Gehäuse 18, einen Temperatursensor 28c zum Erfassen einer Temperatur der Kompressoreinrichtung 14, einen Temperatursensor zum Erfassen einer Temperatur der von der Kompressoreinrichtung 14 erzeugten Druckluft oder dergleichen auf. Die Temperatursensoren 28a, 28b, 28c sind mit der Steuereinrichtung 26 verbunden.

Die Luftversorgungsanlage 10 und insbesondere deren temperaturkritischen Komponenten können so mit Hilfe der unabhängig angesteuerten Kühleinrichtung 20 auch dann belüftet / gekühlt werden, wenn die Luftversorgungsanlage 10 nicht in Betrieb ist. Auf diese Weise kann verhindert werden, dass sich die Luftversorgungsanlage 10 bzw. deren Komponenten auf dem Dach 12 / Unterflur des Schienen- oder Nutzfahrzeugs beispielsweise aufgrund hoher Umgebungstemperaturen oder starker Sonneneinstrahlung zu stark erhitzen.

### BEZUGSZEICHENLISTE

- 10: Luftversorgungsanlage
- 12: Fahrzeug bzw. Fahrzeugdach
- 14: Kompressoreinrichtung
- 16: Lufttrocknereinrichtung
- 18: Gehäuse
- 20: Kühleinrichtung
- 22: Kühllufteingang
- 24: Kühlluftausgang
- 26: Steuereinrichtung
- 28a: Temperatursensor
- 28b: Temperatursensor
- 28c: Temperatursensor

## Patentansprüche

1. Luftversorgungsanlage (10), insbesondere zur Montage in oder an einem Schienenfahrzeug oder Nutzfahrzeug, aufweisend:
eine Kompressoreinrichtung (14) zum Erzeugen von Druckluft;
eine Lufttrocknereinrichtung (16) zum Entfeuchten der Druckluft;
ein Gehäuse (18) zum Kapseln der Kompressoreinrichtung (14) und der Lufttrocknereinrichtung (16); und
eine Kühleinrichtung (20) zum Kühlen der Luftversorgungsanlage (10), wobei die Kühleinrichtung (20) unabhängig vom Betriebszustand der Kompressoreinrichtung (14) betreibbar ist;
**dadurch gekennzeichnet, dass**
wenigstens ein Temperatursensor (28a, 28b, 28c) zum Erfassen wenigstens eines Temperaturwerts der Luftversorgungsanlage (10) vorgesehen ist und die Kühleinrichtung (20) in Abhängigkeit von dem wenigstens einen erfassten Temperaturwert betreibbar ist.

2. Luftversorgungsanlage nach Anspruch 1, bei welcher
eine Steuereinrichtung (26) zum Ansteuern der Kühleinrichtung (20) vorgesehen ist, wobei die Kühleinrichtung (20) unabhängig vom Betriebszustand der Kompressoreinrichtung (14) ansteuerbar ist.

3. Luftversorgungsanlage nach einem der vorhergehenden Ansprüche, bei welcher
die Kühleinrichtung (20) eine Lüftereinrichtung zum Erzeugen eines Kühlluftstroms durch das Gehäuse (18) aufweist.

4. Luftversorgungsanlage nach Anspruch 3, bei welcher
das Gehäuse (18) wenigstens einen Kühllufteingang (22) und wenigstens einen Kühlluftausgang (24) aufweist und die Lüftereinrichtung der Kühleinrichtung (20) derart in oder an dem Gehäuse (18) angeordnet ist, dass sie einen Kühlluftstrom von dem wenigstens einen Kühllufteingang (22) durch das Gehäuse (18) zu dem wenigstens einen Kühlluftausgang (24) erzeugen kann.

## Claims

1. Air supply system (10), in particular for mounting in or on a rail vehicle or a utility vehicle, comprising:
a compressor device (14) for producing compressed air;
an air drying device (16) for extracting moisture from the compressed air;
a housing (18) for enclosing the compressor device (14) and the air drying device (16); and
a cooling device (20) for cooling the air supply system (10), such that the cooling device (20) can be operated independently of the operating condition of the compressor device (14);
**characterised in that**
at least one temperature sensor (28a, 28b, 28c) is provided for detecting at least one temperature value of the air supply system (10) and the cooling device (20) can be operated as a function of the at least one temperature value detected.

2. Air supply system according to Claim 1, in which
a control device (26) is provided for controlling the cooling device (20), such that the cooling device (20) can be controlled independently of the operating condition of the compressor device (14).

3. Air supply system according to either of the preceding claims, in which
the cooling device (20) comprises a fan device for producing a flow of cooling air through the housing (18).

4. Air supply system according to Claim 3, in which:
the housing (18) comprises at least one cooling air inlet (22) and at least one cooling air outlet (24), and the fan device of the cooling device (20) is arranged in or on the housing (18) in such manner that it can produce a cooling air flow from the at least one cooling air inlet (22) through the housing (18) to the at least one cooling air outlet (24).

## Revendications

1. Système (10) d'alimentation en air, notamment pour le montage dans ou sur un véhicule ferroviaire ou un véhicule utilitaire, comprenant :
un dispositif (14) à compresseur pour produire de l'air comprimé ;
un dispositif (16) à sécheur d'air pour déshumidifier l'air comprimé ;
une enveloppe (18) pour enfermer le dispositif (14) à compresseur et le dispositif (16) à sécheur d'air ; et
un dispositif (20) de refroidissement pour refroidir le système (10) d'alimentation en air, le dispositif (20) de refroidissement pouvant fonctionner indépendamment de l'état de fonctionnement du dispositif (14) à compresseur ;
**caractérisé en ce que**
il est prévu au moins une sonde (28a, 28b, 28c) de température pour relever au moins une valeur de température du système (10) d'alimentation en air et le dispositif (20) de refroidissement peut fonctionner en fonction de la au moins une valeur de température, qui est relevée.

2. Système d'alimentation en air suivant la revendication 1, dans lequel
il est prévu un dispositif (26) de commande pour commander le dispositif (20) de refroidissement, le dispositif (20) de refroidissement pouvant être commandé indépendamment de l'état de fonctionnement du dispositif (14) à compresseur.

3. Système d'alimentation en air suivant l'une des revendications précédentes, dans lequel
le dispositif (20) de refroidissement a un dispositif de ventilateur pour produire un courant d'air de refroidissement dans l'enveloppe (18).

4. Système d'alimentation en air suivant la revendication 3, dans lequel
l'enveloppe (18) a au moins une entrée (22) d'air de refroidissement et au moins une sortie (24) d'air de refroidissement et le dispositif de ventilateur du dispositif (20) de refroidissement est disposé dans ou sur l'enveloppe (18), de manière à pouvoir produire un courant d'air de refroidissement allant de la au moins une entrée (22) d'air de refroidissement à la au moins une sortie (24) d'air de refroidissement en passant dans l'enveloppe (18).
